# EUROPEAN PATENT APPLICATION

(11) **EP 0 914 938 A1**
(43) Date of publication of application: **12.05.1999**
(21) Application number: 97203341.9
(22) Date of filing: 28.10.1997
(51) Int. Cl.: B30B 15/10, F16H 3/54, F16H 57/10

(54) **Device for transmitting movement to crankshafts of presses and the like with an epicyclic gearing and double brake**

(71) Applicant: BARUFFALDI S.P.A., I-20097 San Donato Milanese Milan (IT)
(72) Inventor: Boffelli, Pier Carlo, Milano (IT)
(74) Representative: Raimondi, Alfredo, Dott. Ing. Prof.

(57) **Abstract**

Device for transmitting movement to crankshafts (21) of presses and the like, comprising a fixed structure (11) carrying a shaft (12) moved by a flywheel (13) actuated by a motor (14), in which there is provided a gearing (100) of the epicyclic type (101,102,103,104) with planet carrier (104) and bell member (103) which are respectively connected to a first brake group (120) and to a second brake group (130; 1130) for actuating or stopping said crankshaft (21).

## Description

The present invention relates to a device for transmitting movement to crankshafts of presses and similar machines, which comprises a gearing of the epicyclic type co-operating with two brake groups for stopping the planet carrier or the bell member of the gearing itself, in order to actuate or stop, respectively, the said crankshaft.

In the metal machining sector it is known to use presses which essentially consist of a crankshaft, which carries and actuates the ram, an actuating group, comprising a motor and a flywheel which may be coaxially connected to the crankshaft carrying the ram head (fast-action press) or to a secondary shaft connected to the crankshaft by means of a reducer (delayed-action press), in order to keep as small as possible the dimensions of the various parts and hence the masses to be moved and the inertia to be overcome with an increase in the tonnage of the presses.

It is also known of mechanisms for transmitting and reducing the movement to said presses based on the use of clutch/clutch or brake/clutch groups in order to actuate the fundamental movements required by the press: positioning at the top dead centre and downwards/upwards stroke towards/from the bottom dead centre where the press performs the required shearing or drawing operation.

Said actuating groups also comprise devices which allow the crankshaft of the press to be rotated at two different speeds depending on the specific use.

Said devices, however, are based on the use of rotating headers supplying the fluid necessary for operation of the movable parts of the said clutch groups, headers which result in an increase in the dimensions, require precision-machining of the parts and complicated and costly assembly and maintenance operations.

The technical problem of the present invention is therefore to provide a device for transmitting movement, in particular for crankshafts of presses and the like, which is of the simple and low-cost type and which can be controlled, minimising the presence of rotating headers for distributing the actuating fluid.

Within the scope of this problem a further requirement is that the device should allow the press shaft to be operated at two speeds which may be varied also during the stroke itself, for example the downward stroke, so as to reduce to a minimum the dead time of the cycle, and that it should be able to be applied easily both to the crankshaft and to any secondary shaft of presses of the known type or similar machines such as shears, paper-cutting devices and the like, without the need for special adaptation and/or modifications of the machine itself.

These technical problems are solved according to the present invention by a device for transmitting movement to crankshafts of presses and similar machines, comprising a fixed structure carrying a shaft moved by a flywheel actuated by a motor, in which there is provided a gearing of the epicyclic type with planet carrier and bell member respectively connected to a first brake group and to a second brake group for actuating or stopping said crankshaft.

Further details may be obtained from the following description of a non-limiting example of embodiment of the invention, provided with reference to the accompanying drawings in which:
Figure 1 shows a schematic cross-section along a vertical plane of the actuating device according to the invention applied to a press in the top end-of-stroke position;
Figure 2 shows the device during the high-speed downward stroke of the ram;
Figure 3 shows the device according to Fig. 1 during the low-speed downward stroke of the ram;
Figure 4 is a variation of the example of embodiment of the device according to Fig. 1;
Figure 5 is a simplified example of embodiment of the device according to Fig. 1 in the top dead centre position; and
Figure 6 shows the device according to Fig. 5 during the downward stroke of the ram.

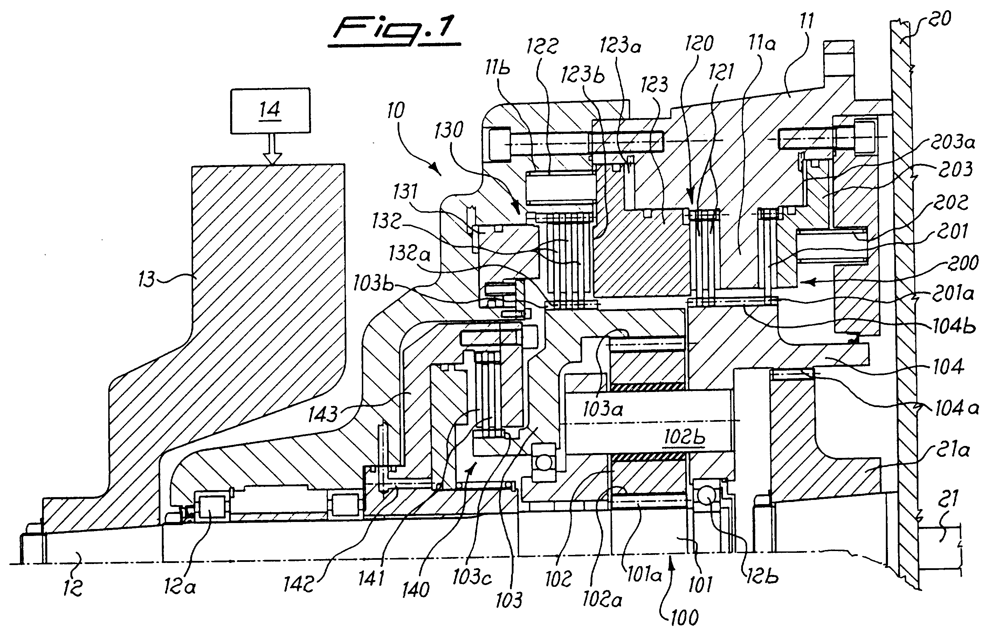

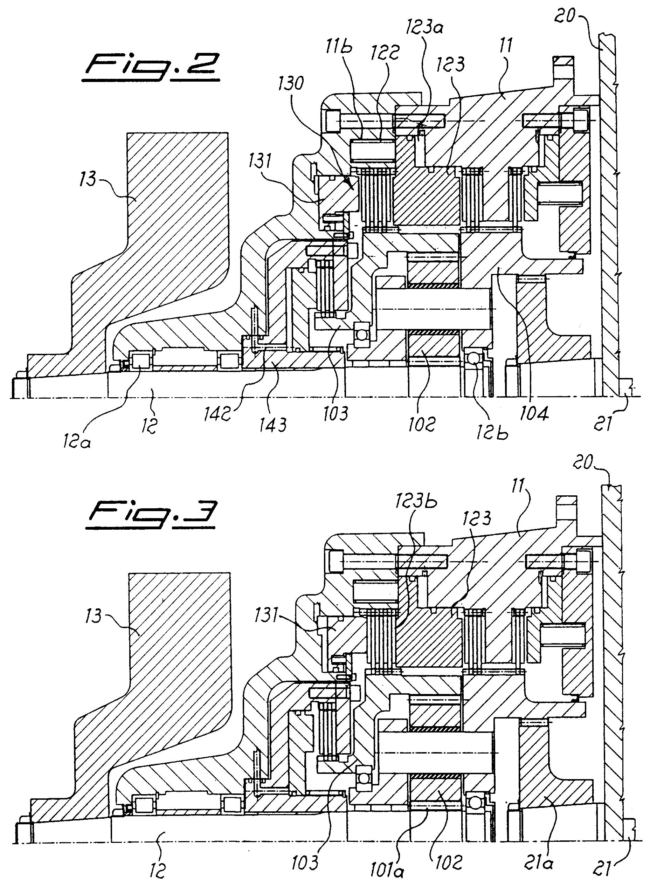

As illustrated in Fig. 1, the device 10 for transmitting movement to a crankshaft 21 carrying the ram of a press, schematically shown with a shoulder 20 thereof, comprises a fixed structure 11, integral with the said shoulder 20, carrying a shaft 12 which is idle with respect to the structure for the insertion of bearings 12a and on which a flywheel 13 actuated in a known manner by a motor 14 is mounted.

Said fixed structure houses internally an epicyclic gearing 100 comprising a crown wheel 101 which is coaxial with the shaft 12 and integral therewith, the toothing 101a of which meshes with the toothing 102a of a plurality of planet gears 102 which, rotating about their own axis of rotation consisting of a pin 102b, also mesh with the internal toothing 103a of a bell member 103.

The pins 102b are keyed onto a planet carrier 104 which is mounted on bearings 12b applied to the shaft 12. The planet carrier 104 has two sets of external toothing 104a and 104b respectively engaging with corresponding teeth of a driving gear 21a, integral with the crankshaft 21, and with discs 121 of a first brake group 120 which, owing to the thrusting action of a plurality of springs 122, tends to keep the discs 121 locked against a fixed flange 11a of the structure 11.

More particularly, said springs 122 are housed in angularly spaced seats 11b of the fixed structure 11 and act on a piston 123 which, by means of a fluid supplied to a duct 123a, may be made to perform a translatory movement against the action of the springs 122 so as to cause opening of the brake 120.

In a position substantially coaxial with the first brake group 120 there is provided a second brake group 130 actuated by means of a second piston 131 and designed to lock rotation of discs 132, the peripheral toothing 132a of which meshes with the external toothing 103b of the bell member 103.

As can be seen in Figure 1, said second brake 130 is designed to react on the surface 123b of the piston 123 of the first brake 120, opposite to the surface acting on its own discs 121, allowing actual operation of the second brake 130 only when the first brake 120 is open and vice versa.

Said bell member 103 has a further external toothing 103c designed to mesh with the discs 141 of a clutch 140 controlled by means of the supplying/discharging of a header 142 which causes engagement/disengagement of the clutch 140 and hence connection/disconnection of the bell member 103 to/from the shaft 12, as will become more apparent below with reference to the description of operation of the transmission.

As illustrated in Fig. 1, the device for transmitting movement also comprises a safety brake 200 which is substantially a mirror-image of the first brake 120 and acts on a disc 201 by means of the thrusting action of a spring 202, which acts on a movable piston 203 which may be displaced in translation against the thrusting action of the spring, by means of the action of a fluid under pressure supplied to a duct 203a.

Said disc 201 of the safety brake 200 has toothing 201a designed to engage with the toothing 104b of the planet carrier 104 so as to cause locking thereof when the top dead centre is reached by the ram.

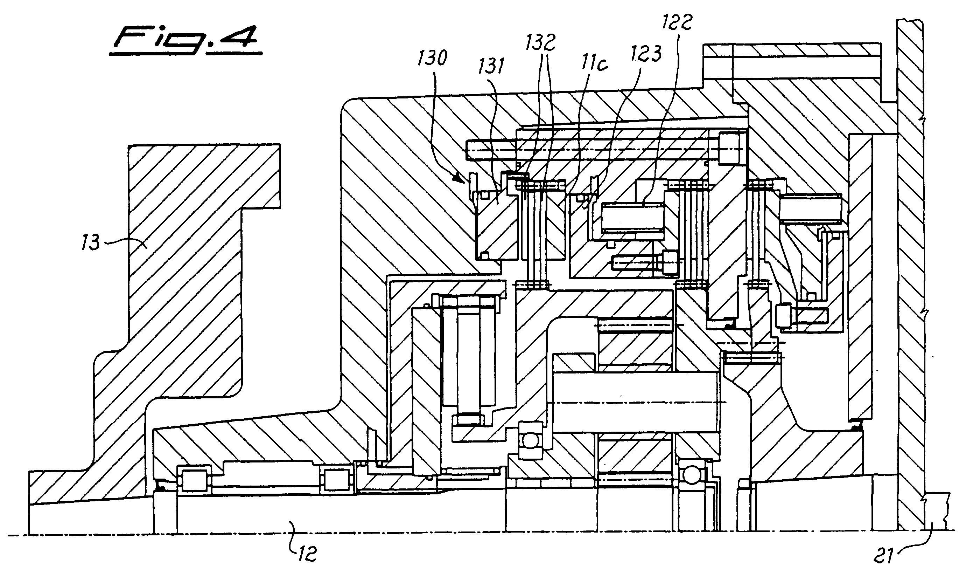

Operation of the press is as follows (Figs. 1 and 2):
- in the rest condition or condition for changing the workpiece (Fig. 1), the press has the ram raised to the top dead centre and the planet carrier 104 is correspondingly locked by the combined action of the first brake 120 and the safety brake 200 which are closed onto the respective discs 121 and 201 by the action of the respective springs 122 and 202 which push the pistons 123 and 203 against the fixed flange 11a; the second brake 130 is open and the clutch 140 is disengaged; consequently, the flywheel 13 rotates the shaft 12, which sets in rotation the planet gears 102 which in turn cause rotation of the bell member 103 without a transmission effect on the crankshaft 21;
- when the press is operated (Fig. 2), the first brake 120 and the safety brake 200 are released, introducing fluid into the respective ducts 123a and 203a so as to displace the pistons 123 and 203 in a direction opposite to the thrusting direction of the respective springs, in order to overcome the thrusting action and free the planet carrier 104. At the same time the second brake 130 is kept open and the clutch 140 engaged so that it connects the bell member 103 to the flange 143 integral with the shaft 12: in these conditions the latter, which is kept in the rotating condition by the flywheel 13, causes the planet gears 102 and the bell member 103 to rotate without rolling of the planet gears on the bell member itself and causing rotation of the planet carrier 104 which actuates the crankshaft 21 at a high speed corresponding to the number of revolutions of the shaft 12.

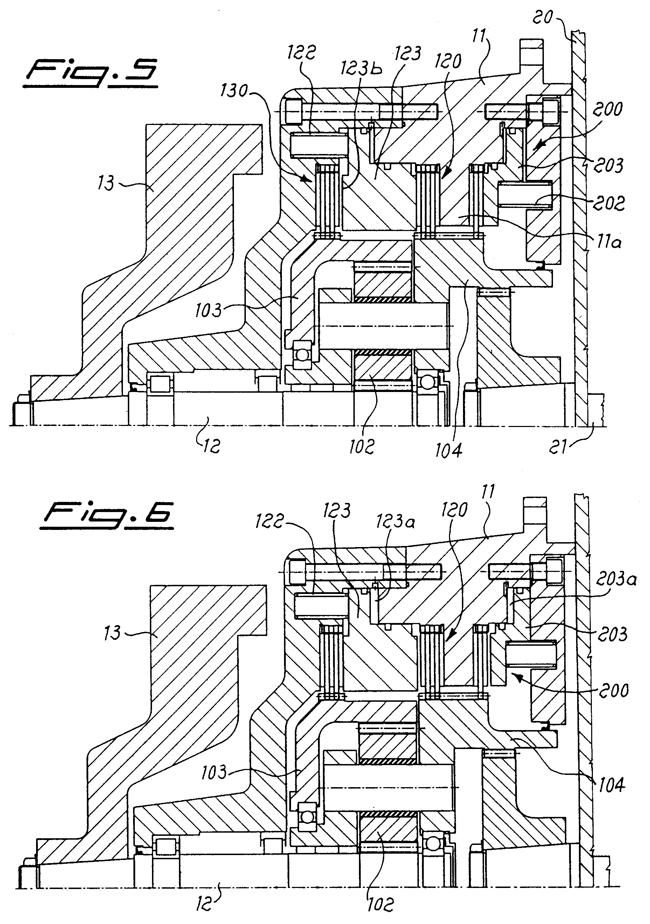

Since it necessary, during the downward stroke, to reduce the speed of the ram head in order to increase the working torque at the moment of contact with the workpiece (Fig. 3):
- the second brake 130 is closed, temporarily disengaging the clutch 140 so as to keep the bell member 103 locked: in these conditions the planet gears 102, rolling on the bell member, set in rotation the planet carrier 104 and hence the crankshaft 15 which rotates at a low speed corresponding to the reduction ratio determined by the epicyclic transmission.

As illustrated in Fig. 4, the second brake group may also be actuated so as to obtain the necessary reaction against a fixed flange 11c of the fixed structure 11, thereby making the second brake 130 independent of the first brake 120.

As illustrated in Figs. 5 and 6, the transmission device may also be realized in a simplified single-speed embodiment; in this case the transmission has only the two brakes 120 and 1130 which are alternately closed and opened by the action of the piston 123. Operation of the configuration according to Figs. 4 and 5 is therefore as follows:
- in the rest condition or condition for changing the workpiece (Fig. 4) the press has the ram raised to the top dead centre and the planet carrier 104 is is correspondingly locked by the action of the first brake 120 and the safety brake 200 closed on the respective discs 121 and 201 by the action of the respective springs 122 and 202 which push the pistons 123 and 203; the second brake 1130 on the other hand is open and therefore the flywheel 13 causes rotation of the shaft 12 which sets in rotation the planet gears 102 which in turn cause rotation of the bell member 103 without any transmission effect;
- when the press is operated (Fig. 5), the two brakes 120 and 200 are released, introducing fluid into the ducts 123a and 203a so as to displace the pistons 123 and 203 in a direction opposite to the thrusting direction of the springs 122 and 202 in order to overcome the thrusting action thereof and free the planet carrier 104; the translatory movement of the piston 123 causes at the same time closing of the second brake 130 which locks the bell member 103: under these conditions the planet gears 102, rolling on the bell member 103, set in rotation the planet carrier 104 and hence the crankshaft 21 which rotates at a low speed corresponding to the reduction ratio determined by the epicyclic transmission.

It is therefore obvious how the press with epicyclic transmission device according to the invention allows a reduction in the dimensions and costs to be obtained, owing to the use of two brake groups interacting respectively with the bell member and with the planet carrier of the epicylic group.

According to the invention it is envisaged, moreover, that the component parts of the device may be constructionally formed in different ways, such that, for example, the toothed coupling systems of the brakes could be replaced by coupling systems of the pin-type or equivalent means.

Furthermore it is envisaged that the brakes may also be actuated by pneumatic operating systems, electromagnets and the like and that the transmission device may be applied to machines which operate in a manner similar to that of presses such as, for example, shears, paper-cutting machines and the like.

## Claims

1. Device for transmitting movement to crankshafts (21) of presses and the like, comprising a fixed structure (11) carrying a shaft (12) moved by a flywheel (13) actuated by a motor (14), characterized in that it comprises a gearing (100) of the epicyclic type (101,102,103,104) with planet carrier (104) and bell member (103) respectively connected to a first brake group (120) and to a second brake group (130;1130) for actuating or stopping said crankshaft (21).

2. Device according to Claim 1, characterized in that said brake groups (120,130) comprise respective discs (121,131) provided with toothing designed to mesh with a corresponding toothing of the planet carrier (104) and the bell member (103).

3. Device according to Claim 1, characterized in that said brake groups (120,130) comprise respective pin-type coupling systems for coupling to the planet carrier and to the bell member of the epicyclic gearing.

4. Device according to Claim 1, characterized in that said first brake group (120) is actuated by resilient means (122) acting on a piston (123) movable in translation parallel to the line of action of said resilient means.

5. Device according to Claim 1, characterized in that said piston is actuated so to perform a translatory movement in a direction opposite to the action of said resilient means (122) by means of a fluid under pressure supplied to a chamber (123a) of the brake (123).

6. Device according to Claim 1, characterized in that said second brake group (130) is actuated by a piston (131) movable in translation.

7. Device according to Claim 1, characterized in that said second brake group (130) reacts against a flange (11c) integral with the fixed structure (11).

8. Device according to Claims 1 and 6, characterized in that said second brake group (130) reacts against a surface (123b) of the piston (123) for actuating the first brake (120), opposite to the actuating surface of the first brake itself.

9. Device according to Claim 1, characterized in that it comprises a clutch group (140) acting on discs (141) in engagement with said bell member (103).

10. Device according to Claims 1 and 9, characterized in that it has two speeds.

11. Device according to Claim 1, characterized in that said second brake group (1130) is actuated by the actuating piston (123) of the first brake group (120).

12. Device according to Claims 1 and 11, characterized in that it has a single speed.

13. Device according to Claim 1, characterized in that it comprises a safety brake (200) acting on the crankshaft (21).

14. Device according to Claim 1, characterized in that it is mounted coaxially with said crankshaft (21) of the press.

15. Device according to Claim 1, characterized in that it is mounted on a secondary shaft connected to the crankshaft (21) by means of a driving gear.
